Europäisches Patentamt

European Patent Office

Office européen des brevets

(11) Veröffentlichungsnummer: **0 348 795**
**A2**

## EUROPÄISCHE PATENTANMELDUNG

(21) Anmeldenummer: **89111196.5**

(22) Anmeldetag: **20.06.89**

(51) Int. Cl.4: **C08J 7/04 , C08G 61/12 , H01B 1/00**

(30) Priorität: **29.06.88 DE 3821885**

(43) Veröffentlichungstag der Anmeldung:
**03.01.90 Patentblatt 90/01**

(84) Benannte Vertragsstaaten:
**BE DE FR GB NL**

(71) Anmelder: **BASF Aktiengesellschaft**
**Carl-Bosch-Strasse 38**
**D-6700 Ludwigshafen(DE)**

(72) Erfinder: **Naegele, Dieter, Dr.**
**Gudastrasse 2**
**D-6520 Worms 1(DE)**
Erfinder: **Neese, Petra, Dr.**
**Bergstrasse 50 a**
**D-6900 Heidelberg(DE)**

(54) **Verbundmaterialien aus einem Trägermaterial und elektrisch leitfähigen Polymerfilmen.**

(57) Verbundmaterialien, bestehend aus einem Trägermaterial und einem darauf aufgebrachten Film aus Homo- oder Copolymerisaten des Pyrrols, Thiophens, Furans oder Anilins oder von polymerisierbaren Derivaten dieser Monomeren, wobei dieser Film eine Schichtstärke von 0,1 bis 10 μm hat, erhältlich durch oxidative Polymerisation mittels einer wäßrigen Lösung eines Oxidationsmittels, in dem man a) das Trägermaterial erst mit dieser Lösung benetzt und b) mit einer Lösung des bzw. der Monomeren in einem organischen Lösungsmittel in Berührung bringt, welches mit Wasser praktisch nicht homogen mischbar ist oder indem man die Vorgänge a) und b) in umgekehrter Reihenfolge durchführt.

Diese Verbundmaterialien dienen zur Herstellung von elektrischen und elektronischen Bauteilen.

EP 0 348 795 A2

# Verbundmaterialien aus einem Trägermaterial und elektrisch leitfähigen Polymerfilmen

Die Erfindung betrifft Verbundmaterialien, bestehend aus einem Trägermaterial und einem darauf aufgebrachten Film aus Homo- oder Copolymerisaten des Pyrrols, Thiophens, Furans oder Anilins oder von polymerisierbaren Derivaten dieser Monomeren, wobei dieser Film eine Schichtstärke von 0,1 bis 10 μm hat, erhältlich durch oxidative Polymerisation mittels einer wäßrigen Lösung eines Oxidationsmittels, indem man a) das Trägermaterial erst mit dieser Lösung benetzt und b) anschließend mit einer Lösung des bzw. der Monomeren in einem organischen Lösungsmittel in Berührung bringt, welches mit Wasser praktisch nicht homogen mischbar ist oder indem man die Vorgänge a) und b) in umgekehrter Reihenfolge durchführt.

Außerdem betrifft die Erfindung eine bevorzugte Variante von Verbundmaterialien, bestehend aus einem flächigen Träger aus wasserdurchlässigen Material und einem darauf aufgebrachten Film aus Homo-oder Copolymerisaten des Pyrrols, Thiophens, Furans oder Anilins oder von polymerisierbaren Derivaten dieser Monomeren, wobei dieser Film eine Schichtstärke von 0,1 bis 10 μm hat, erhältlich durch oxidative Polymerisation mittels einer wäßrigen Lösung eines Oxidationsmittels, indem man die Polymerisation an der Grenzfläche einer wäßrigen Lösung des Oxidationsmittels und einer Lösung des bzw. der Monomeren in einem organischen Lösungsmittel, welches mit Wasser praktisch nicht homogen mischbar ist, vornimmt, wobei man das Trägermaterial in der Grenzschicht der beiden Phasen anordnet.

Zusätzlich betrifft die Erfindung Verfahren zur Herstellung dieser Verbundmaterialien und ihre Verwendung in elektrischen und elektronischen Bauteilen.

Die oxidative Polymerisation von 5- und 6-gliedrigen Heterocyclen und ähnlichen Verbindungen wie Anilin, die ein konjugiertes $\pi$-Elektronensystem aufweisen, führt zu elektrisch leitfähigen Polymeren. Verfahren zur Herstellung dieser Polymere und ihre Eigenschaften sind u.a. in der EP-A-36 118 und EP-A-99 055 sowie den Schriften von E.U. Genies et al, Mol. Cryst. Liq. Crist. (1985), Vol. 121, Seite 181 bis 186 und A.G. McDiarmid et al, l.c., Vol. 121, Seite 173 bis 180 beschrieben.

Führt man die oxidative Polymerisation elektrochemisch durch, so entstehen filmförmige Polymerisate und mit diesen beschichtete Verbundmaterialien, wobei meist die Anode in entsprechender Ausgestaltungsform als Trägermaterial dient (s. EP-A-84 108 455, EP-A-86 111 554 und DE-A-36 30 708).

Die kostengünstigere Herstellung der Polymere erfolgt durch chemisch oxidative Polymerisation.

Nach einer Arbeit von K.C. Khulke und R.S. Mann, Journal of Polymer Science, Vol. 20 (1982), Seite 1089 bis 1095, kann Pyrrol in wäßriger Lösung unter Einwirkung von Oxidationsmitteln polymerisiert werden, wobei das Polymerisat in Form eines feinteiligen schwarzen Pulvers erhalten wird.

Diese Polymerisate eignen sich jedoch schlecht zur Beschichtung von anderen Materialien.

Die in der EP-A-206 133 beschriebenen Verbundmaterialien weisen inhomogene Schichtstrukturen und Schichtdicken auf, woraus schlechte elektrische Leitfähigkeiten der Polymerschichten und mangelnde Haftung der Schichten auf dem Trägermaterial resultieren.

Aus der JP-A-62/106 923 ist ein Verfahren zur Herstellung von elektrisch leitfähigen Polymeren in Filmform durch oxidative chemische Polymerisation bekannt, indem man ein wäßriges Lösungsmittel enthaltend $FeCl_3$ als Oxidationsmittel mit einer organischen Phase überschichtet, die das oder die Monomeren enthält.

Die Filme lassen sich jedoch nach ihrer Herstellung nicht mehr zu Verbundmaterialien verarbeiten, da die Polymerfilme aus mechanischen Gründen nachträglich nicht mehr auf einen Träger aufgebracht werden können.

Weiterhin sind die großen Schichtstärken von 35 bis 200 μm der Filme für einige Anwendungszwecke nicht geeignet.

Aufgabe der Erfindung war es, Verbundmaterialien zur Verfügung zu stellen, die kostengünstig herstellbar sind und deren Verfahren zur Herstellung auf beliebige Trägermaterialien anwendbar ist. Zusätzlich sollen die darauf aufgebrachten elektrisch leitfähigen Polymerschichten eine homogene Filmform mit sehr geringer Schichtdicke sowie guter Haftung auf dem Trägermaterial aufweisen.

Demgemäß wurden die eingangs definierten Verbundmaterialien gefunden.

Weiterhin wurde ein Verfahren zur Herstellung von Verbundmaterialien aus einem Trägermaterial und einem darauf aufgebrachten Film aus Homo- oder Copolymerisaten des Pyrrols, Thiophens, Furans oder Anilins oder von polymerisierbaren Derivaten dieser Monomeren, wobei dieser Film eine Schichtstärke von 0,1 bis 10 μm hat, durch oxidative Polymerisation gefunden, das dadurch gekennzeichnet ist, daß man a) das Trägermaterial mit einer wäßrigen Lösung eines Oxidationsmittels benetzt und b) mit einer Lösung des bzw. der Monomeren in einem organischen Lösungsmittel in Berührung bringt, welches mit Wasser praktisch nicht homogen mischbar ist oder indem man die Vorgänge a) und b) in beliebiger Reihenfolge durchführt.

Darüber hinaus betrifft die Erfindung eine bevorzugte Variante zur Herstellung von Verbundmaterialien aus einem flächigen Träger aus wasserdurchlässigem Material und einem darauf aufgebrachten Film aus Homo- oder Copolymerisaten des Pyrrols, Thiophens, Furans oder Anilins oder von polymerisierbaren Derivaten dieser Monomeren, wobei dieser Film eine Schichtstärke von 0,1 bis 10 μm, hat durch oxidative Polymerisation, welches dadurch gekennzeichnet ist, daß man die Polymerisation an der Grenzfläche einer wäßrigen Lösung des Oxidationsmittels und einer Lösung des bzw. der Monomeren in einem organischen Lösungsmittel, welches mit Wasser praktisch nicht homogen mischbar ist, vornimmt, wobei man das Trägermaterial in der Grenzschicht der beiden Phasen anordnet.

Zusätzlich betrifft die Erfindung die Verwendung dieser Verbundmaterialien in elektrischen und elektronischen Bauteilen.

Die erfindungsgemäßen Verbundmaterialien bestehen aus einem beliebigen Trägermaterial und dem darauf aufgebrachten Film aus elektrisch leitfähigen Polymeren.

Als Trägermaterial eignen sich Nichtleiter, aber auch elektrische Leiter wie Metalle. Von den metallisch-leitenden Materialien eignen sich z.B. Stahl, Titan, Kobalt, Chrom, Vanadin, Aluminium, Kupfer oder beliebige Legierungen dieser Materialien. Durch Verwendung von Metallen im erfindungsgemäßen Verfahren wird es möglich, den elektrischen Widerstand der Metalloberfläche entsprechend der Leitfähigkeit der elektrisch leitfähigen Polymere anzupassen, was in einigen Fällen (z.B. Feldglättung in Hochspannungskabeln, Beeinflussung der Reflexion von Radarwellen) von Vorteil ist.

Als nichtleitende Trägermaterialien kommen anorganische Verbindungen wie Glas, Silikate, Ton oder keramische Stoffe in Frage. Bevorzugt sind thermoplastische Kunststoffe wie Polyolefine, Polystyrol, Polyacryl- und Polymethacrylverbindungen, Polyamide, Polyether, Polyurethane, Polyethersulfone, Polyimide oder Polyamidimide. Auch Polytetrafluorethylen, Polyester, Polyetherketone, Polysulfone und Polyetherimide können nach den erfindungsgemäßen Verfahren beschichtet werden.

Die Oberfläche dieser Materialien kann glatt oder offenporig sein und es können sowohl kristalline als auch amorphe Materialien eingesetzt werden.

Zur besseren Haftung der Filme an der Oberfläche der Trägermaterialien kann diese durch Anätzen, Aufrauhen, Behandlung mit einem Plasma oder Anquellen in Lösungsmitteln wie Hexan, Toluol oder Wasser vorbehandelt werden.

Die Form der Materialien ist beliebig; sie können z.B. als Stäbe, Bänder, Folien, Drähte, Fasern, Geflechte, Netze oder Fliese vorliegen. Ebenso ist es möglich, die Schichten auf Materialien beliebiger Form, z.B. solcher, wie sie technische Bauteile, Maschinenelemente oder Schaltelemente haben, aufzubringen.

Die erfindungsgemäß verwendbaren Monomere sind 5- oder 6-gliedrige Heterocyclen sowie die oxidativ polymerisierbaren Derivate dieser Monomeren. Vorzugsweise enthalten diese Verbindungen Stickstoff, Schwefel oder Sauerstoff als Heteroatome.

Als Beispiele dieser Verbindungen seien Thiophen, Furan, Anilin und besonders bevorzugt Pyrrol genannt. Oxidativ polymerisierbare Derivate des Pyrrols sind sowohl N-substituierte als auch C-substituierte Pyrrole. Als geeignete Substituenten kommen neben Hydroxy-, Methoxy- und Nitrogruppen besonders Alkyl-, Aryl-, Arylalkyl- und Alkylarylgruppen mit bis zu 24 C-Atomen in Betracht. Besonders bevorzugte Substituenten sind bei den Alkylresten die Methylgruppe einerseits und langkettige Alkylreste mit 6 bis 24 C-Atomen andererseits sowie die Phenyl-, Tolyl- und Benzylgruppe.

Die Monomeren können mono- oder disubstituiert sein, worunter auch Verbindungen wie Carbazol, Dibenzothiophen, Dibenzofuran, Indol oder Dipyrrol verstanden werden. Die Monomeren sind als Homo- oder Copolymerisate verwendbar; bevorzugt werden Polymerisate des Pyrrols, die gegebenenfalls andere Monomere in Mengen von 1 bis 40 Gew.% enthalten.

Gemäß den erfindungsgemäßen Verfahren lassen sich die Verbundmaterialien je nach der gewünschten Anwendungsform mittels verschiedener Varianten herstellen. Hierzu taucht man das entsprechende Trägermaterial in ein Lösungsmittel oder Lösungsmittelgemisch, welches das Oxidationsmittel oder das Monomere enthält. Anschließend bringt man den so benetzten Träger in eine Lösung ein, die das gewünschte Monomer oder das Oxidationsmittel enthält. Die Dicke der entstehenden leitfähigen Polymerschicht hängt u.a. von der Oberflächenbeschaffenheit (z.B. Quellbarkeit, Rauheit) des Trägermaterials ab. Bevorzugte Trägermaterialien für das erfindungsgemäße Verfahren sind vollflächige oder dreidimensionale Träger, die vollständig von allen Seiten mit den Polymerfilmen beschichtet werden können.

In einer anderen bevorzugten Ausführungsform der erfindungsgemäßen Verfahren befindet sich das flächige Trägermaterial an der Grenzschicht der beiden nicht miteinander mischbaren Lösungsmitteln. Flächige Träger sind z.B. lösungsmitteldurchlässige Trägermaterialien wie Draht- oder Kunststoffnetze. Die Zugabe einer der beiden Komponenten erfolgt erst nach entsprechender Anordnung des Trägermaterials an der Grenzfläche. Die einzelnen Fasern eines Kunststoffnetzes werden dabei nur von einer Seite beschichtet, so daß die Unter- bzw. Oberseite des Netzes unbehandelte thermoplastische Fasern aufweist, während die andere Seite eine Beschichtung von Fasern und Zwischenräumen mit Polymerfilmen zeigt. Die auf dem flächigen Träger auf diese Weise aufgebrachten Schichten sind in der Regel frei von mechanischen Defekten.

Vorteilhaft löst man das Oxidationsmittel in Wasser, wobei man gegebenenfalls geringe Mengen eines schwach protischen Lösungsmittels wie Ethylalkohol zusetzt.

Die Monomeren können zweckmäßigerweise in aprotischen Lösungsmitteln wie Methylenchlorid, Chloroform, Tetrachlorkohlenstoff und besonders bevorzugt in n-Hexan gelöst werden. Die Bildung von Polymeren in der Lösung wird weitestgehend ausgeschlossen, so daß die eingesetzte Monomermenge fast ausschließlich für die Beschichtung genutzt werden kann.

Ist das spezifische Gewicht des Trägermaterials höher als das der unteren Lösung bzw. niedriger als das der oben befindlichen Lösung, so reichen in einigen Fällen die Grenzflächenkräfte nicht aus, um das Trägermaterial in der Grenzfläche zu halten; es sinkt ab bzw. steigt auf. Durch Zugabe spezifisch schwererer bzw. leichterer, löslicher, inerter Zusatzstoffe können die spezifischen Gewichte der Lösungen so eingestellt werden, daß das Trägermaterial in der Grenzschicht stabilisiert wird. Als Beispiele für derartige Verbindungen seien Bariumchlorid, $CdCl_2$, $Pb(NO_3)_2$ oder $CCl_4$ (als Zusatz zu einer n-Hexan-Lösung) genannt.

Als Oxidationsmittel verwendet man vorteilhaft Sauerstoff enthaltende Oxidationsmittel sowie übergangsmetallverbindungen, die, bezogen auf 1 Mol der zu polymerisierenden Verbindung, in Mengen von 2,1 bis 2,5 mol, insbesondere von 2,2 bis 2,3 mol, eingesetzt werden. Von den Oxidationsmitteln haben sich insbesondere Peroxosäuren und deren Salze, wie die Peroxodischwefelsäure und deren Alkali- und Ammoniumsalze sowie Peroxoborate oder Peroxochromate wie Natriumperborat, Kaliumdichromat bewährt. Auch Wasserstoffperoxid sowie $PbO_2$ können verwendet werden. Bei den übergangsmetallverbindungen eignen sich Oxidationsmittel auf der Basis von Mn(III) sowie $Ce(SO_4)_2$, $RuCl_3$, $H_3PMo_{12}O_{40}$, $MoCl_5$, $CrO_3$ und $CrCl_3$ in Verbindung mit $H_2O_2$. Besonders bevorzugt sind Verbindungen des dreiwertigen Eisens wie $FeCl_3$, $Fe_2(SO_4)_3$, $Fe(ClO_4)_3$, $K_3[Fe(CN)_6]$ oder $FeCl_2$ in Verbindung mit $H_2O_2$.

Die Herstellung der erfindungsgemäßen Verbundmaterialien kann als weitere Ausführungsform auch kontinuierlich erfolgen. Dabei geht man von Folien und Gewebewickeln aus, die durch entsprechend angeordnete Führungsrollen nacheinander durch einzelne Bäder mit den oben beschriebenen Komponenten oder kontinuierlich an der Grenzschicht der beiden Phasen geführt werden können.

Nach beendeter Beschichtung entfernt man die Verbundstoffe aus den Lösungen, wäscht und trocknet diese. Um die entstandenen dünnen Polymerbeschichtungen nicht zu beschädigen, kann man das spezifisch leichtere Lösungsmittel verdunsten lassen.

Die Dicke der auf den Materialien aufgebrachten Schichten aus elektrisch leitfähigen Polymeren liegt im allgemeinen im Bereich von 0,1 bis 10 μm, bevorzugt sind bei den erfindungsgemäßen Verbundmaterialien Schichtdicken, die geringer als 5 μm sind.

Die Polymerisation der Monomeren führt man vorzugsweise in einem Temperaturbereich von -10 bis 50°C durch.

Die Verweilzeit beträgt von 1 bis 1000 min, bevorzugt von 5 bis 60 min.

Die elektrische Leitfähigkeit der aufgebrachten Polymeren liegt im allgemeinen im Bereich von $10^{-8}$ bis $10^2$ $S \cdot cm^{-1}$, insbesondere im Bereich von $10^{-2}$ bis 10 $S \cdot cm^{-1}$.

Mittels der erfindungsgemäßen Verfahren lassen sich Verbundmaterialien herstellen, die mit äußerst dünnen und sehr gleichmäßigen Polymerfilmen beschichtet sind. Diese geringe Schichtdicke ist für eine Vielzahl von Anwendungen erforderlich, bei denen auf der einen Seite eine gute elektrische Leitfähigkeit notwendig ist, um z.B. elektrostatische Aufladungen zu vermeiden, andererseits jedoch eine hohe Transparenz für elektromagnetische bzw. Teilchenstrahlung gefordert wird. Zusätzlich kann man die beschriebenen Verbundmaterialien aus einem Thermoplasten und einem Polymerfilm ohne Schwierigkeiten auf Bauteile wie z.B. Braun'sche Röhren aufbringen, da der Thermoplast als Schmelzkleber verwendet werden kann, ohne den Polymerfilm zu beschädigen.

Die Verbundmaterialien lassen sich zusätzlich als antistatisch ausgerüstete Verpackungsfolien, Rollen, Lager, Zahnräder oder Gleitelemente verwenden.


Beispiel 1

In einem runden Glasgefäß von 6 l Inhalt (Durchmesser: 30 cm) wurden 4 l einer wäßrigen 10 %igen $FeCl_3 \cdot 6 H_2O$-Lösung vorgelegt. Auf die Oberfläche wurde vorsichtig ein Gewebenetz aus Polyamid (Nylon 6, Durchmesser 27 cm) aufgelegt. Die Maschenweite betrug 230 μm und der Fadendurchmesser 100 μm, Gewebedicke 200 μm. Träger und Eisenlösung wurden anschließend mit einer 1 %igen Lösung von Pyrrol in n-Hexan überschichtet. Nach 30 Minuten wurde das Gewebenetz herausgezogen und mit Wasser gewaschen.

Schichtstärke des Polypyrrolfilms: 2 μm (bestimmt mittels Mikrometerschraube)

Leitfähigkeit des Materials: 0,15 S·cm$^{-1}$, bezogen auf 200 μm Träger + Polypyrrol.

Leitfähigkeit des Films: 32 S·cm$^{-1}$ (bestimmt mittels 4-Punktmessung nach L.B. Valdes, Proceedings I.R.E. 42, 420 (1954).

Beispiel 2

Analog Beispiel 1 wurden 2 l einer 3 %igen FeCl$_3$·6 H$_2$O-Lösung vorgelegt. Das Gewebenetz aus Polyamid (siehe Beispiel 1) sank in die wäßrige Phase ab.

Durch Zusatz von 2 l einer 25 %igen Bariumchloridlösung (25 g BaCl$_2$·2 H$_2$O auf 75 g H$_2$O) zur wäßrigen Eisentrichloridlösung stabilisierte sich der Träger auf der Oberfläche.

Die weitere Arbeitsweise entsprach Beispiel 1. Die Reaktionszeit betrug 3 Minuten.

Leitfähigkeit des Verbundmaterials: 0,02 S·cm$^{-1}$, bezogen auf 200 μm Träger + Polypyrrol.

Beispiel 3

Ein Formteil aus Polymethylmethacrylat von 7 cm Länge und 3 cm Breite wurde in einer Mischung aus 30 g Hexan, 70 g Aceton und 4 g Pyrrol für 30 min angequollen. Anschließend wurde die so vorbehandelte Folie in eine Lösung von 30 g FeCl$_3$·6 H$_2$O in 70 g H$_2$O getaucht.

Nach 60 min wurde das Verbundmaterial aus der Lösung herausgezogen, mit H$_2$O gespült und an der Luft getrocknet.

Leitfähigkeit das Verbundmaterials: 120 kΩ□.

Transmission im sichtbaren Bereich: 45 % (bestimmt mit einem UV/VIS-Spektrophotometer, Lambda 5 der Fa. Perkin Elmer).

Beispiel 4

Eine Polyamidplatte (2,2·2,2 cm, ; Dicke: 2 mm) wurde unter Rückfluß in 100 ml 80 %igem Ethanol für 2 Stunden gekocht.

Anschließend wurden zu der erkalteten Lösung 160 ml einer 30 %igen FeCl$_3$·6 H$_2$O-Lösung hinzugegeben.

Die Einwirkungsdauer betrug 40 min.

Danach wurde die Platte 3 Tage in einer 10 %igen Lösung von Pyrrol in n-Hexan belassen.

Oberflächenwiderstand vorher: 10$^{10}$ Ω.

Oberflächenwiderstand nachher: 1,1·10$^6$ Ω.

**Ansprüche**

1. Verbundmaterialien, bestehend aus einem Trägermaterial und einem darauf aufgebrachten Film aus Homo- oder Copolymerisaten des Pyrrols, Thiophens, Furans oder Anilins oder von polymerisierbaren Derivaten dieser Monomeren, wobei dieser Film eine Schichtstärke von 0,1 bis 10 μm hat, erhältlich durch oxidative Polymerisation mittels einer wäßrigen Lösung eines Oxidationsmittels, indem a) man das Trägermaterial erst mit dieser Lösung benetzt und b) anschließend mit einer Lösung des bzw. der Monomeren in einem organischen Lösungsmittel in Berührung bringt, welches mit Wasser praktisch nicht homogen mischbar ist, oder indem man die Vorgänge a) und b) in umgekehrter Reihenfolge durchführt.

2. Verbundmaterialien, bestehend aus einem flächigen Träger aus wasserdurchlässigen Material und einem darauf aufgebrachten Film aus Homo- oder Copolymerisaten des Pyrrols, Thiophens, Furans oder Anilins oder von polymerisierbaren Derivaten dieser Monomeren, wobei dieser Film eine Schichtstärke von 0,1 bis 10 μm hat, erhältlich durch oxidative Polymerisation mittels einer wäßrigen Lösung eines Oxidationsmittels, indem man die Polymerisation an der Grenzfläche einer wäßrigen Lösung des Oxidationsmittels und einer Lösung des bzw. der Monomeren in einem organischen Lösungsmittel, welches mit Wasser praktisch nicht homogen mischbar ist, vornimmt, wobei man das Trägermaterial in der Grenzschicht der beiden Phasen anordnet.

3. Verbundmaterialien nach den Ansprüchen 1 und 2, in denen das Polymere aus Pyrrol aufgebaut ist.

4. Verbundmaterialien nach den Ansprüchen 1 bis 3, in denen das Trägermaterial die Form von Bändern, Folien, Fasern, Netzen, Geflechten, Geweben oder gelochten Oberflächen hat.

5. Verbundmaterialien nach den Ansprüchen 1 bis 4, in denen der folienförmige, nichtleitende Träger aus thermoplastischem Kunststoff besteht.

6. Verfahren zur Herstellung von Verbundmaterialien aus einem Trägermaterial und einem darauf aufgebrachten Film aus Homo- oder Copolymerisaten des Pyrrols, Thiophens, Furans oder Anilins oder von polymerisierbaren Derivaten dieser Monomeren, wobei dieser Film eine Schichtstärke von 0,1 bis 10 μm hat durch oxidative Polymerisation, dadurch gekennzeichnet, daß man a) das Trägermaterial mit einer wäßrigen Lösung eines Oxidationsmittels benetzt und b) mit einer Lösung des bzw. der Monomeren in einem organischen Lösungsmittel in Berührung bringt, welches mit Wasser praktisch nicht homogen mischbar ist oder in dem man die Vorgänge a) und b) in umgekehrter Reihenfolge durchführt.

7. Verfahren zur Herstellung von Verbundmaterialien aus einem flächigen Träger aus wasserdurchlässigem Material und einem darauf aufgebrachten Film aus Homo- oder Copolymerisaten des. Pyrrols, Thiophens, Furans oder Anilins oder von polymerisierbaren Derivaten dieser Monomeren, wobei dieser Film eine Schichtstärke von 0,1 bis 10 $\mu$m hat durch oxidative Polymerisation, dadurch: gekennzeichnet, daß man die Polymerisation an einer Grenzfläche einer wäßrigen Lösung des Oxidationsmittels und einer Lösung des bzw. der Monomeren in einem organischen Lösungsmittel, welches mit Wasser praktisch nicht homogen mischbar ist, vornimmt, wobei man das Trägermaterial an der Grenzschicht der beiden Phasen anordnet.

8. Verfahren nach Anspruch 7, dadurch gekennzeichnet, daß man zur Erhöhung der Dichte der wäßrigen Phase lösliche, inerte Zusatzstoffe zugibt, damit der Träger an der Grenzschicht der beiden Phasen verbleibt.

9. Verfahren nach den Ansprüchen 6 und 7, dadurch gekennzeichnet, daß die organische Phase die oxidativ polymerisierbaren Monomeren in einer Menge von 1 bis 100 g•l$^{-1}$ und die wäßrige Phase das Oxidationsmittel in einer Konzentration von 10 bis 1000 g•l$^{-1}$ enthält.

10. Verwendung der Verbundmaterialien gemäß den Ansprüchen 1 bis 9 zur Herstellung von elektrischen und elektronischen Bauteilen.

11. Verwendung der Verbundmaterialien gemäß Anspruch 5 zur Herstellung von elektrisch und elektronischen Bauteilen, wobei man die Bauteile mit den Verbundmaterialien mittels des Thermoplasten als Schmelzkleber verbindet.